# EUROPÄISCHE PATENTSCHRIFT

(11) **EP 3 807 690 B1**
(45) Veröffentlichungstag und Bekanntmachung des Hinweises auf die Patenterteilung: **04.05.2022**
(21) Anmeldenummer: 19731627.6
(22) Anmeldetag: 06.06.2019
(51) Int. Cl.: G02B 19/00, G02B 27/12, H04B 10/11, G02B 3/08

(54) **DATEN-KOMMUNIKATIONSMODUL**
DATA COMMUNICATIONS MODULE
MODULE DE COMMUNICATION DE DONNÉES

(30) Priorität: 12.06.2018 DE 102018209368
(43) Veröffentlichungstag der Anmeldung: 21.04.2021
(73) Patentinhaber: Fraunhofer-Gesellschaft zur Förderung der angewandten Forschung e.V., 80686 München (DE)
(72) Erfinder: KIRRBACH, René, 01109 Dresden (DE)
(74) Vertreter: Pfitzner, Hannes
(86) Internationale Anmeldenummer: PCT/EP2019/064890
(87) Internationale Veröffentlichungsnummer: WO 2019/238543

(56) Entgegenhaltungen:
- EP-A2- 2 827 179
- WO-A1-2019/231601
- DE-A1-102008 061 688
- DE-A1-102016 109 159
- US-A1- 2008 092 879
- US-A1- 2009 128 921
- US-A1- 2015 146 435

## Beschreibung

Ausführungsbeispiele der vorliegenden Erfindung beziehen sich auf eine Optik für ein Sende- und/oder Empfangs-Element sowie auf ein entsprechendes Herstellungsverfahren. Weitere Ausführungsbeispiele beziehen sich auf ein Kommunikationsmodul mit einer entsprechenden Optik sowie einem Sende- oder Sende-Empfangs-Element, auf einem Array aus Kommunikationsmodulen sowie auf ein Kommunikationsmodul-System.

Optische drahtlose Kommunikation arbeitet mit wohldefinierten Sichtfeldern, innerhalb denen ein Kommunikationskanal aufgebaut wird. Unter einem Spot versteht man den von einem Sender, dem sogenannten Transmitter (Tx), bestrahlten Bereich in der Zielebene, in dem eine Kommunikation gewährleistet ist. Die Empfangsleistung am Empfänger, dem Receiver (Rx), bestimmt direkt die Signalstärke und somit auch die Qualität des Signals am Empfänger. In nachfolgender Beschreibung wird davon ausgegangen, dass ein Transmitter in Kombination mit einem Receiver einen optisch, drahtlosen Transceiver formt. Transmitter, Receiver oder Transceiver können allgemein als Kommunikationsmodul verstanden werden.

Als Stand der Technik ist die WO 2019/231601 A1 sowie die US 2015/146435 A1 sowie die DE 102008061688 A1 zu nennen. Die DE 102008061688 offenbart eine Vorsatzlinse für eine Lichtquelle, um eine homogene Lichtabstrahlung zu erreichen. In den Dokumenten WO 2019/231601 A1 und US 2015/146435 A1 sind Warnleuchten offenbart, die im weitesten Sinne der Kommunikation dienen, nicht aber der Datenkommunikation. Darüber hinaus ist auch noch auf die US 2008/092879 hinzuweisen, die eine drahtlose optische Kommunikationsschnittstelle offenbart. Die Optik dient dazu, die Strahlung von einem Emitter zu kollimieren.

Innerhalb des Spots sollte die Leistung möglichst homogen verteilt sein, damit die Signalqualität und damit die Bitfehlerrate im Zielbereich konstant ist. Wird eine Modulationsart mit Bitloading eingesetzt, kann zudem sichergestellt werden, dass auch die Datenrate innerhalb des Spots konstant bleibt. Im Sender werden typischerweise Leuchtdioden (LEDs) oder Laserdioden (LDs) als Emitter eingesetzt. LEDs sind kostengünstig und bieten eine hohe Ausgangsleistung. Da die Strahlung innerhalb der LEDs isotrop emittiert wird, besitzen LEDs ein sehr breites Abstrahlprofil. Darüber hinaus ist die räumliche Ausdehnung einer LED in der Regel deutlich größer als die einer Laserdiode, da typischerweise eine Primäroptik im Gehäuse der LED integriert oder deren Chip in einen Kunststoff vergossen ist. Diese beiden Faktoren machen es schwierig, die gesamte emittierte Strahlung in einen wohldefinierten Spot zu überführen, der sowohl eine homogene Leistungsverteilung als auch scharfe Kanten aufweist. Bisher wurde das Problem durch eine Kombination von Linsen und Spiegeln gelöst. Hieraus ergeben sich jedoch die Nachteile, dass das resultierende Gesamtsystem vergleichsweise groß ist. Auch sind die Herstellungskosten hoch, da zwei Komponenten gefertigt und montiert werden müssen. Dieser Kostenfaktor wird besonders kritisch, wenn ein nicht-rotationssymmetrischer Kanal gefordert ist, der eine nicht-rotationssymmetrische Freiform-Optik benötigt. Darüber hinaus ist ein derartiges Gesamtsystem weniger effizient, da Absorptionsverluste am Spiegel entstehen. Bei LDs kann die Strahlformung einfacher erfolgen, da sie typischerweise über einen kleineren Raumwinkel abstrahlen als LEDs. LDs und deren Ansteuerelektronik ist allerdings kostenintensiver als die von LEDs. Deshalb besteht der Bedarf nach einem verbesserten Optikkonzept, um LEDs effektiv nutzen zu können.

Aufgabe der vorliegenden Erfindung ist es ein Optik-Konzept für optisch drahtlose Kommunikationsgeräte zu schaffen, welche die beliebige Abstrahlcharakteristik eines Emitters in ein beliebig geformtes Sichtfeld überführt. Dabei steht das Erreichen einer hohen Effizienz und einer spezifizierten Leistungsverteilung innerhalb des Spots im Vordergrund ebenso wie eine kostengünstige Herstellung.

Die Aufgabe wird durch den Gegenstand des unabhängigen Patentanspruchs gelöst. Ausführungsbeispiele der vorliegenden Erfindung schaffen eine Optik für ein Sende- und/oder Empfangs-Element, das ausgebildet ist, in Richtung einer Hauptstrahlungsrichtung ein Signal zu emittieren und/oder zu empfangen. Die Optik umfasst einen aus einem transparenten Material (wie z. B. Glas oder Kunststoff) geformten optischen Körper. Der Terminus "transparent" bezieht sich dabei auf die Wellenlänge, die zur Kommunikation genutzt wird. Die Optik kann deshalb beispielsweise nicht-transparent im sichtbaren Bereich sein, wenn der nah-infraroten Bereich zur Kommunikation genutzt wird. Die Optik weist zumindest eine Kavität und eine gegenüber zu der Kavität ausgebildete zweite Grenzfläche auf. Zusätzlich ist die geometrische Form der Optik so, dass sie eine weitere seitliche (äußere) Grenzfläche aufweist, die einen Totalreflexionsbereich umfasst. Innerhalb der Kavität kann das Sende- und/oder Empfangs-Element angeordnet werden. Die Kavität ist so in dem optischen Körper geformt, dass zwischen der Kavität und dem optischen Körper eine erste Grenzfläche ausgebildet wird. Die erste Grenzfläche bildet einen ersten zentralen Linsenbereich (beliebig, meist aber konvex, gekrümmten Bereich) sowie einen den zentralen Linsenbereich umgebenden ersten Brechungsbereich, die den zentralen Linsenbereich einschließt und zusammen mit dem zentralen Linsenbereich die Kavität formt. Die zweite Grenzfläche bildet einen zweiten zentralen Linsenbereich (beliebig gekrümmt) sowie einen den zweiten zentralen Linsenbereich umgebenden zweiten Brechungsbereich aus. Bei allen Oberflächen handelt es sich um Freiformflächen, welche eine beliebige Krümmung aufweisen können. So kann eine Fläche partiell konvex sein, an einer anderen Stelle dann aber konkav. Dies ist notwendig um die spezifizierte Leistungsverteilung innerhalb des Spots zu erreichen.

Entsprechend der Erfindung wirken die zwei Linsenbereich zusammen, um eine erste Strahlengruppe (entlang der Hauptstrahlungsrichtung) abzubilden. Die Brechungsbereiche (der ersten und zweiten Grenzfläche) und der Totalreflexionsbereich wirken z.B. ebenfalls zusammen, um eine zweite Strahlengruppe abzubilden. Hierbei sei angemerkt, dass die erste Strahlengruppe beispielsweise für den Sendefall verwendet werden kann, während die zweite und weiter Strahlengruppen beispielsweise für den Empfangsfall verwendet werden kann. Das kann selbstverständlich auch umgekehrt sein, da im Prinzip jede Strahlengruppe für unterschiedliche Fälle (Sende- oder Empfangsfall) einsetzbar ist, so dass gleichzeitig mehrere Tx- und Rx-Kanäle durch den Einsatz der Optik realisierbar sind. Somit wird im Resultat die Realisierung kostengünstiger MIMO-Konzept (multiple Input - multiple Output) ermöglicht.

Ausführungsbeispielen der vorliegenden Erfindung liegt die Erkenntnis zugrunde, dass eine Optik, die sowohl auf Brechung (vgl. Linsenbereiche) als auch auf Totalreflexion (u.U. in mehreren Bereichen) basiert, die Funktionalität eines Spiegels und Linsen in einem Element kombiniert, so dass die beispielsweise durch einen Emitter in der Optik emittierte Strahlung (entlang der Hauptstrahlungsrichtung) von der Transmitter-Optik ins Sichtfeld (FOV, Field of View) gelenkt wird. Dies wird dadurch erreicht, dass die entlang der Hauptstrahlungsrichtung emittierte bzw. gesendete Strahlung durch den ersten und zweiten Linsenbereich (die beispielsweise fluchtend zueinander angeordnet sind bzw. fluchtend, so dass deren optischen Achsen auf der Hauptstrahlungsachse liegen) gebündelt werden, während die zur Seite emittierte Strahlung bzw. schräg emittierte Strahlung durch den Totalreflexionsbereich ( plus erster und zweiter Brechungsbereich) eingefangen und entlang oder schräg zu der Hauptstrahlungsrichtung geleitet wird. Durch dieses einzige, optische Element wird die Systemkomplexität reduziert.

Entsprechend Ausführungsbeispielen kann der Totalreflexionsbereich Fresnel-Strukturen aufweisen. In alle brechenden Flächen können Fresnel-Strukturen eingebracht werden, um die Dicke der Optik zu reduzieren.

Entsprechend den Ausführungsbeispielen kann die Hauptstrahlungsachse durch das Sende- und/oder Empfangs-Element hindurch verlaufen. Wie bereits eingangs erwähnt, dienen die zwei Linsenbereiche (die bevorzugterweise fluchtend zueinander angeordnet sind) dazu, um eine erste Strahlengruppe in Richtung der Hauptstrahlungsrichtung abzubilden. An dieser Stelle sei angemerkt, dass bei der hier erläuterten Optik Reflexionsverluste (Fresnel-Verluste) an den Grenzflächen den einzigen relevanten Verlustfaktor darstellen. Entsprechend zusätzlichen Ausführungsbeispielen können auch diese Verluste durch optionale Anti-Reflexionsbeschichtungen minimiert werden.

Entsprechend einem Ausführungsbeispiel schließt die seitliche Grenzfläche bzw. der Totalreflexionsbereich mit der Hauptstrahlungsrichtung einen Winkel im Bereich von 5° bis 85° ein. Entsprechend weiteren Ausführungsbeispielen kann dieser seitliche Totalreflexionsbereich zwei oder mehr Teilbereiche (gewinkelt zueinander) umfassen. Mittels des Totalreflexionsbereichs wird in Kombination mit den Grenzflächen ermöglicht, eine zweite und weitere Strahlengruppen neben der ersten Strahlengruppe (vgl. Linsenbereich) spatial getrennt zu formen. Mit einem Totalreflexionsbereich, der zwei oder mehr Teilbereiche hat, können zwei oder mehr Strahlengruppen neben der ersten Strahlengruppe spatial getrennt geformt werden. Dadurch wird erreicht, dass die hier erläuterte Optik es ermöglicht, mehrere Kommunikationskanäle spatial voneinander zu trennen, so dass je nach Implementierung des Totalreflexionsbereichs, zwei oder sogar drei oder mehr Kommunikationskanäle spatial getrennt aufgebaut werden können. Der Hintergrund hierzu ist, dass ein Transmitter beispielsweise zu mehreren Receivern sendet, die in unterschiedlichen Raumrichtungen liegen. Eine Trennung der Kanäle reduziert den geometrischen, optischen Verlust, im Vergleich zu dem Fall, in dem man über den gesamten Raum abstrahlt. Dadurch lässt sich die Reichweite bzw. Datenrate des Kommunikationskanals erhöhen, wenn die relativen Positionen der Transmitter und Receiver zueinander konstant bleiben. Entsprechend weiterer Ausführungsbeispiele kann die Datenrate eines Kommunikationslinks dadurch vergrößert werden, indem mehrere Kanäle zu in einem sogenannten "multiple input multiple output" (MIMO) System kombiniert werden. In diesem System kann durch die oben erläuterte gute Trennung der Kanäle ein Übersprechen zwischen den Kanälen vermieden werden. Bei dem oben erläuterten Optikmodul werden vorteilhafterweise auf einem möglichst kleinen Raum eine Vielzahl von Parallelkanälen realisiert. Ein derartiger Ansatz wäre mit dem oben erläuterten Stand der Technik-Mitteln basierend auf einer Kombination des Spiegels und der Linsen nicht in einfacher, kompakter, effizienter und kostengünstiger Art und Weise möglich.

Der Totalreflexionsbereich kann entsprechend Ausführungsbeispielen beliebig gekrümmte Oberflächen aufweisen. Wenn man davon ausgeht, dass der Totalreflexionsbereich mehrere Teilbereiche umfasst, kann jeder der Teilbereiche anders gekrümmt sein.

Entsprechend weiteren Ausführungsbeispielen ist der erste Brechungsbereich der ersten Grenzfläche so angeordnet, dass die Grenzfläche mit der Hauptstrahlungsrichtung einen Winkel kleiner oder gleich 45° anschließt. Entsprechend weiteren Ausführungsbeispielen ist der zweite Brechungsbereich der zweiten Grenzfläche gegenüber der Hauptstrahlungsrichtung so angeordnet, dass hier ein Winkel größer oder gleich 45° eingeschlossen wird. Bezüglich des zweiten Brechungsbereichs sei angemerkt, dass dieser ebenfalls beliebig gekrümmt ist, um die Strahlgruppen zu formen und die über dem Totalreflexionsbereich reflektierte Strahlung entsprechend ins Sichtfeld zu emittieren, sodass sich die spezifizierte Leistungsverteilung im Spot ergibt. Hierbei kann die Krümmung entsprechend Ausführungsbeispielen auch so sein, dass zwei oder mehr Teilbereiche gebildet werden. Diese können gegeneinander unterschiedlich gewinkelt bzw. auch gegenüber der Hauptstrahlungsrichtung einen unterschiedlichen Winkel bilden. Dies ist besonders dann vorteilhaft, wenn der Totalreflexionsbereich ebenfalls zwei- oder mehrgeteilt ausgebildet ist. Die Verwendung von zwei oder mehr Teilbereichen ermöglicht vorteilhafterweise, dass eine zweite, dritte,... Strahlengruppe entlang einer zweiten, dritten, ... Strahlungsrichtung, die gewinkelt zu der Hauptstrahlungsrichtung verläuft, gebildet wird.

Entsprechend Ausführungsbeispielen ist der optische Körper nicht-rotationssymmetrisch oder rotationssymmetrisch. Hierbei wäre es beispielsweise denkbar, dass eine Rotationssymmetrie um eine Achse entlang der Hauptemissionsrichtung bzw., um genau zu sein, um eine Achse entlang der Hauptemissionsrichtung durch das Sende- und/oder Empfangs-Element, gebildet wird. Bei Vorsehen einer Achse als Rotationssymmetrieachse verläuft diese entsprechend den Ausführungsbeispielen zentral durch den ersten und zweiten Linsenbereich. Besitzt der hingegen Körper keine Rotationssymmetrie, so ist eine Axialsymmetrie denkbar. Der Gesamtkörper könnte dann aus zwei gespiegelte Hälften oder vier gespiegelte Viertel, o.ä. gebildet werden.

An dieser Stelle sei angemerkt, dass die Optik sowohl für einen Transmitter als auch für einen Receiver verwendet werden kann. Gleichzeitig wäre es natürlich auch möglich, dass die Optik für eine Kombination aus Transmitter und Receiver verwendet wird.

Ausführungsbeispiele schaffen einen Transmitter oder einen Receiver oder einen Transceiver, mit dem entsprechenden Sende- und/oder Empfangs-Element sowie der Optik, wobei das Sende- und/oder Empfangs-Element zentral in der Kavität bzw. allgemein in der Kavität angeordnet ist. Als Sende-Element kann beispielsweise eine LED oder LD eingesetzt werden, während das Empfangs-Element ein Detektor, wie z. B. eine Photodiode, ist. An dieser Stelle sei angemerkt, dass unter einem Kommunikationsmodul allgemein jeder Receiver bzw. jeder Transmitter und jeder Transceiver verstanden wird. Transmitter und Receiver senden bzw. empfangen ausschließlich, wobei ein Transceiver sowohl empfangen als auch senden kann. Entsprechend Ausführungsbeispielen weist ein für den Empfang ausgelegter Receiver bevorzugterweise eine quadratische oder rechteckige Form der zweiten Grenzfläche auf. Zu dem Ausführungsbeispiel mit der Limitierung auf den Sende- oder Empfangsmodus sei angemerkt, dass derartige Transmitter/ Receiver sehr typisch sind, bei welchen nebeneinander das Gegenstück, d.h. ein Receiver/Transmitter, angeordnet sind. Der Hintergrund hierzu ist, dass gelegentlich eine Trennung von Transmitter und Receiver gewünscht wird, um das Übersprechen zu verringern. In diesem Fall werden separate Tx- bzw. Rx-Optiken eingesetzt. Entsprechend einem weiteren Ausführungsbeispiel kann in der Kavität sowohl Sender- als auch Empfängereinheit angeordnet sein, wenn beispielsweise über die Totalreflexionsflächen bzw. allgemein über die Grenzfläche räumlich voneinander getrennte Strahlengruppen übertragen werden. Hierbei wird dann beispielsweise über den Linsenbereich ein Tx-Kanal aufgebaut, während über die äußeren Bereiche, d.h. unter anderem durch den Totalreflexionsbereich, ein Rx-Kanal oder auch mehrere Rx-Kanäle oder auch eine Kombination von Tx- und Rx-Kanälen aufgebaut werden. Indem beide Optiken (Tx und Rx) in einem einzigen Modul vereint werden, kann die Komplexität, der Herstellungsaufwand und die Größe des Gesamtsystems deutlich reduziert werden.

Weitere Ausführungsbeispiele schaffen ein Transceiver-Array mit zumindest zwei nebeneinander angeordneten Transceivern oder mit einer Sender-/Empfängeranordnung in Kombination mit einer Optik, die ausgebildet ist über die Grenzflächen spatial getrennte Strahlengruppen zu übertragen. Hierbei kann entsprechend einer Variante das erste der zwei nebeneinander angeordneten Kommunikationsmodule für den Sendemodus ausgelegt sein, während das andere für den Empfangsmodus ausgelegt ist. Dieses Array ist selbstverständlich beliebig in jede Richtungen erweiterbar, so dass eine N*1 bzw. 1*N bzw. N*N-Matrix ergibt, wobei sich bevorzugterweise Receiver und Transmitter abwechseln. Entsprechend einer weiteren Variante können unter Zuhilfenahme oben diskutierter Optik mehrere Tx- oder Rx- oder auch Tx-Rx- Kanäle über unterschiedliche Bereiche der Optik übertragen werden. So kann Transmitter und Receiver in einem Transceiver mit Optik vereint werden und aus diesen Elementen ein Array geschaffen werden. Hierbei können natürlich auch mehrere dieser Einheiten als N*1 bzw. 1*N bzw. N*N-Matrix kombiniert werden, um noch mehr Kanäle zu realisieren.

Diese Arrays ermöglichen also mehrere Kanäle nebeneinander zu übertragen. Deshalb weist ein weiteres Ausführungsbeispiel ein Transceiver-System auf mit zumindest zwei Transceiver-Arrays, die einander gegenüberliegen, wobei ein für den Empfang ausgelegter Receiver einem für das Senden ausgelegten Transmitter geometrisch zugeordnet ist.

Entsprechend weiteren Ausführungsbeispielen wird ein Herstellungsverfahren der obigen Optik geschaffen, das den Schritt des Formens des optischen Körpers umfasst. Hierbei wird der Schritt derart durchgeführt, dass das optische Material homogen in dem optischen Körper verteilt ist. Mögliche Herstellungstechnologien sind Fräsen, Spritzgießen, Drehen, 3D-Drucker oder Ähnliches mit ausreichender Präzision. Bei diesen Herstellungsverfahren wird der optische Körper in einem Schritt hergestellt, was die Produktion signifikant vereinfacht und damit insbesondere bei großen Stückzahlen zu erheblichen Herstellungskostenreduktionen führt. Diese Kostenreduktion ist besonders signifikant gegenüber dem Stand der Technik-Ansätzen, bei welchen eine Kombination von mehreren Komponenten eingesetzt wurden. Durch die Herstellung von zwei Komponenten sowie die Montage dieser sind die Kosten höher.

Weitere Abbildungen sind in den Unteransprüchen definiert. Ausführungsbeispiele der vorliegenden Erfindung werden anhand der beiliegenden Zeichnungen erläutert. Es zeigen:
- Fig. 1: eine schematische Darstellung einer Optik, z. B. einer Tx-TIR-Optik (Sendeoptik basierend auf der Totalreflexion, TIR) für optisch drahtlose Kommunikationsmittel gemäß Ausführungsbeispielen;
- Fig. 2: zeigt eine schematische Darstellung der Optik aus Fig. 1 im Sendefall zur Ermittlung mehrerer Strahlengruppen bzw. zum Aufbau mehrerer Kommunikationskanäle gemäß Ausführungsbeispielen;
- Fig. 3, 4: zeigen schematische Darstellungen zur Erläuterung eines MIMO-Ansatzes gemäß Ausführungsbeispielen;
- Fig. 5a,5b: zeigen eine schematische Darstellung einer Optik in Kombination mit einem Sendeelement und einem Empfangselement gemäß weiteren Ausführungsbeispielen.

Bevor Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer auf einander anwendbar bzw. austauschbar ist.

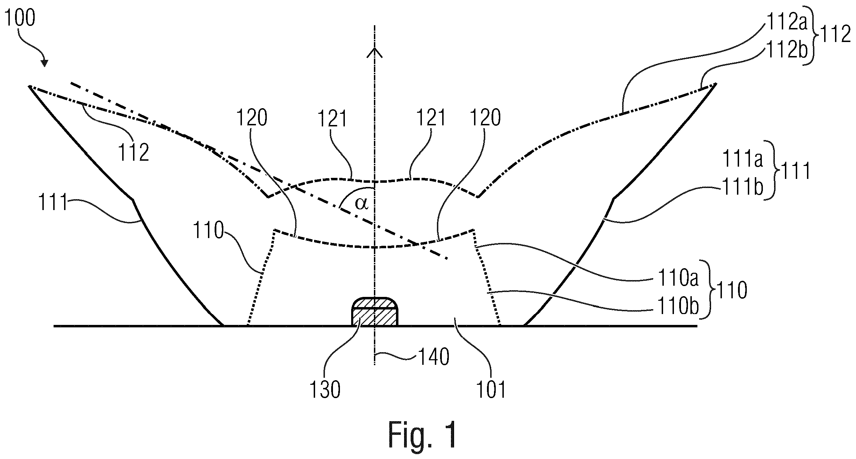

Fig. 1 zeigt eine Optik 100, die durch den optischen Körper 100 geformt ist. Diese Optik 100 ist in diesem Ausführungsbeispiel mit einem Sendemodul 130 kombiniert, das ausgebildet ist, entlang der Hauptstrahlungsrichtung 140 zu senden. In diesem Fall wird von einer Tx-TIR-Optik gesprochen. Wird die Optik hingegen mit einem Photodetektor kombiniert, spricht man von einer Rx-TIR-Optik.

Bei der Optik 100 bzw. dem optischen Körper 100 wird in diesem Ausführungsbeispiel davon ausgegangen, dass es sich um eine rotationssymmetrische Variante handelt, nämlich rotationssymmetrisch um die Achse 140. Es sei an dieser Stelle aber auch darauf hingewiesen, dass die Rotationssymmetrie nicht zwingend erforderlich ist, sondern dass auch andere Symmetrien, wie z. B. eine Axialsymmetrie (so dass z.B. die rechte und linke Seite gleich ist),oder auch gar keine Symmetrie denkbar wäre. Bei dieser allgemeinen, nicht symmetrischen Variante weichen beide Seiten geometrisch voneinander ab.

Der optische Körper 100 ist bevorzugterweise aus einem homogenen Material, wie z. B. einem mineralischen Glas oder einem Kunststoffglas bzw. im Allgemeinen ein optisch transparentes Material mit einer geringen Absorption im Spektralbereich der Kommunikationswellenlängen, geformt. Es ist deshalb denkbar, dass das Material im sichtbaren Bereich nicht-transparent ist, solange eine Kommunikationswellenlänge im ultravioletten oder infraroten Bereich gewählt wird. Entsprechend Ausführungsbeispielen weist der optische Körper 100 eine erste Grenzfläche 110 + 120 sowie eine zweite Grenzfläche 112 + 121 auf. Zusätzlich weist der optische Körper 100 eine seitliche Grenzfläche mit einem Totalreflexionsbereich 111 auf. Diese seitliche Grenzfläche 111 grenzt den Körper seitlich also lateral nach Außen ab, während die Grenzflächen 110 + 120 und 112 + 121 den Körper senkrecht zur Hauptstrahlungsrichtung 140 begrenzen.

Die Grenzfläche 120 (+110) und 121 (+112) liegen einander gegenüber. Die erste Grenzfläche 110 und 120 grenzt den optischen Körper 100 von einer Kavität 101 ab, in welcher der Sender 130 bzw. allgemein das Sende- und/oder Empfangs-Element 130 angeordnet ist. Diese Kavität 101 wird entlang der optischen Achse 140 durch die Grenzfläche 120 definiert, die eine beliebig gekrümmte bzw. konvex gekrümmte Form aufweist, um einen zentralen Linsenbereich zu formen, und seitlich durch eine Grenzfläche 110, die den ersten Brechungsbereich zeigt. Die optische Achse des Linsenbereichs 120 kann beispielsweise deckungsgleich mit der Rotationssymmetrieachse 140 und auch damit z.B. parallel zu der Hauptstrahlungsrichtung 140 des Sendelements 130 verlaufen. Der Linsenbereich 120 ist ausgebildet, um eine Strahlengruppe (z. B. emittiert durch das Tx-Element 130) entlang der optischen Achse 140 abzubilden.

Der Brechungsbereich 110 ist gegenüber der optischen Achse 140 so angeordnet, dass das seitlich, im Bezug zur optischen Achse 140, emittierte Licht durch den Brechungsbereich 110 auf den Totalreflexionsbereich 111 abgebildet wird. Die genaue Form von dem Brechungsgrad, und damit zum einen von der optischen Dichte des Körpers 100 und kann je nach Material oder Gas in der Kavität 101 ebenso variieren. Zum anderen resultiert die Form aus den Flächen 110 und 112, sowie aus der spezifizierten Leistungsdichte, die im Spot erreicht werden soll, bzw. der Empfangscharakteristik, die die Optik bereitstellen soll, wenn sie als Empfangsoptik eingesetzt wird.

Die zweiten, d.h. die oberen Grenzflächen 121 + 112 formen ebenfalls einen Linsenbereich, nämlich den Bereich 121 sowie einen zweiten Brechungsbereich 112. Dieser Brechungsbereich 112 umgibt seitlich den Linsenbereich 121 und ist dazu ausgebildet, um Licht beispielsweise parallel zu der Hauptstrahlungsrichtung 140 oder leicht gewinkelt zu der Hauptstrahlungsrichtung 140 auf bzw. von dem Totalreflexionsbereich 111 abzubilden.

Der Linsenbereich 121 ist in diesem Ausführungsbeispiel in Fluchtung mit dem Linsenbereich 120, d. h. also auch derart angeordnet, dass die optische Achse des Linsenbereichs 121 mit der Rotationssymmetrieachse 140 in Deckung ist. Dadurch wird die Strahlengruppe, die entlang der Hauptstrahlungsrichtung 140 transmittiert wird, in Richtung der Hauptstrahlungsrichtung 140 gelenkt. Der Linsenbereich 121 wirkt entsprechend Ausführungsbeispielen mit dem Linsenbereich 120 zusammen, so dass durch die beiden Linsenbereiche 120 und 121 eine Linse geformt wird. Entsprechend Ausführungsbeispielen ist der Linsenbereich 121 beliebig gekrümmt, hier beispielsweise konvex. Bei dieser Variante mit zwei konvex gekrümmt ausgeführten Linsenbereichen 120 und 121 wird eine Sammellinse geformt, die entlang der Hauptstrahlungsrichtung 140 die emittierte Strahlung weiter entlang der Hauptstrahlungsrichtung weiterleitet. An dieser Stelle sei angemerkt, dass der genaue Krümmungsgrad des Linsenbereichs 121 sowie auch des Linsenbereichs 120 von der spezifizierten Leistungsdichte im Spot und damit von der gewünschten Brennweite abhängt. Damit hängt sie auch von dem Abstand des optischen Körpers 100 gegenüber dem Sender 130 (bzw. Empfänger) ab. Die Flächen der Linsenbereiche 120 können beliebig geformt sein und können deshalb als Freiformflächen klassifiziert werden. Ein weiterer Variationsparameter stellt wiederum den Brechungsgrad an den Grenzflächen und damit auch die optische Dichte (die dem Brechungsindex beeinflusst) dar.

Der Brechungsbereich 112 umgibt den zentral angeordneten Linsenbereich 121 und ist in diesem Ausführungsbeispiel optionaler Weise ebenfalls gekrümmt ausgeführt, um eine Formung einer weiteren Strahlengruppe zu ermöglichen. Es ist denkbar, dass der Brechungsbereich Fresnel-Strukturen enthält, die zur Reduktion der Dicke der Optik dienen.

Entsprechend dem Hauptausführungsbeispiel weist der optische Körper 100 eine weitere Grenzfläche 111 auf, um Totalreflexion von Strahlung, die über den Brechungsbereich 110 und 112 einfällt bzw. ausfällt, zu bewirken. An der Grenzfläche 111 wird ein Totalreflexionsbereich 111 ausgebildet, der mit Hauptstrahlrichtung 140 einen Winkel, wie z. B. einen Winkel im Bereich zwischen 5° und 85° einschließt. Entsprechend Ausführungsbeispielen ist diese Grenzfläche 111 eine allgemeine Freiformfläche, sodass die Krümmung und damit der Winkel zur Hauptstrahlrichtung 140, abhängig von der Position auf der Grenzfläche 111, variiert. Es sei angemerkt, dass unter den Winkelangaben immer der Winkel zwischen der Hauptstrahlungsrichtung und der jeweiligen Tangente gemeint ist (siehe Fig. 1, Bereich 112, Winkel a) Der Totalreflexionsbereich 111 wirkt mit den Brechungsbereichen 110 und 112 zusammen, so dass beispielsweise seitlich von der Sendediode 130 emittiertes Licht durch den Brechungsbereich 110 transmittiert wird, auf den Totalreflexionsbereich 111 fällt und dort durch Totalreflexion auf den weiteren Brechungsbereich 112 gelenkt wird und so z. B. parallel zu der optischen Achse 140 oder schräg zu der optischen Achse 140 die Optik 100 verlässt. Es sei angemerkt, dass in diesem Beispiel die optische Achse der Hauptstrahlrichtung entspricht. Umgekehrt kann auch Licht durch die Brechungsfläche 112 einfallen und von dieser auf den Totalreflexionsbereich 111 gelenkt werden. Durch Totalreflexion im Bereich 111 wird es dann zum Brechungsbereich 110 reflektiert um dort auf ein Empfangselement 130 gelenkt zu werden, wo es unter einem seitlichen Einfallswinkel detektiert wird.

Nachdem nun die Struktur entsprechend der Basisvariante und erweiterten Varianten erläutert wurde, wird nachfolgend auf die Funktionsweise gegangen.

Die hier dargestellte Optik 100 setzt sowohl Brechung als auch Totalreflexion ein und vereint damit die Funktionalität eines Spiegels mit der von Linsen in einem einzelnen Element. Das hier dargestellte Optikmodul stellt eine total reflektierende Optik (TIR) zur Formung des Kommunikationskanals dar. Die Optik 100 bzw. die TIR Optik 100 (z. B. Tx-Optik) wird über einen oder mehrere Sende-/Empfangselemente, hier ein Sendeelement 130, platziert und ist so geformt, dass sie das nahezu gesamte emittierte Licht des Sendeelements 130 in den Spot lenkt. Optionaler Weise können auch mehrere Sendeelemente 130 in der Kavität 101 platziert werden, wenn deren räumliche Ausdehnung beispielsweise verhältnismäßig klein ist. Dies ist im Regelfall bei LD- und Mikro-LED-Arrays der Fall. Diskrete Emitterbauelemente sind allerdings auch denkbar.

Die Grenzflächen im Zentrum 120 und 121, die auch als Linsenbereiche 120 und 121 bezeichnet sind, lenken die in kleinen Winkeln (gemessen von der optischen Achse 140) emittierte Strahlung in das FOV. Die Grenzflächen 110, 111 und 112 lenken die Strahlung, die in größeren Winkeln emittiert wird, ebenso in das FOV. Dabei tritt an den Grenzflächen am seitlichen Rand 111 eine Totalreflexion auf. Strahlung welche durch die Grenzflächen 112 und 121 emittiert wurde, kann sich nach dem Verlassen der Optik gegenseitig überlagern um die gewünschte Leistungsverteilung im Spot zu erzielen, wobei dies aber nicht zwingend der Fall sein muss.

In Abhängigkeit des Materials der Sendeoptik ist es auch möglich, die Strahlung, die nach hinten emittiert wird (d. h. in einem Winkel größer 90° - gemessen zur optischen Achse 140) in das Sichtfeld zu konzentrieren. Damit deckt die Optik mehr als einen Halbraum ab. In diesem Fall befindet sich das Sendeelement 130 oberhalb des unteren Endes der Kavität 101. Die TIR-Optik kann mit dem Composite Ray Mapping-Verfahren [1] berechnet werden, wobei folgende Eigenschaft entscheidend ist. Das von der Quelle 130 emittierte Licht wird in zwei oder mehr Strahlengruppen (/-Bündel) eingeteilt, die auf unterschiedliche Flächen der Optik (120 + 121 oder 110 + 111 + 112) gelenkt und so unterschiedlich geformt werden. Das Ausführungsbeispiel nimmt eine Unterteilung in zwei oder sogar drei Strahlengruppen vor, da die Grenzflächen 110, 111 und 112 beispielsweise je zwei Teilbereiche für die unterschiedliche Strahlgruppen haben. Nachfolgend wird kurz erläutert, wie eine Unterteilung in drei Strahlengruppen möglich wäre:
Die erste Strahlengruppe kann den beiden zentralen Linsenbereichen 120 und 121 zugeordnet werden. Die anderen beiden Strahlengruppen werden jeweils über die Flächen 110a, 111a und 112a bzw. 110b, 111b und 112b geformt. Dass es sich beispielsweise bei 111 tatsächlich um zwei Flächenbereiche handelt, kann gut an dem Knick in der Mitte von 111, zwischen 111a und 112b erkannt werden. Die Flächen können in beliebig vielen Flächenabschnitten untergliedert werden, so dass auch noch mehr als die drei Strahlengruppen übertragbar sind. Hieran wird auch deutlich, dass es sich bei den gesamten Flächen 110, 111, 112 um Freiformflächen handeln muss.

Sichtfelder mit großem Aspektverhältnis, das heißt stark unterschiedlichen Ausdehnungen entlang der verschiedenen Achsen, werden möglich, indem die verschiedenen Strahlgruppen unterschiedliche Bereiche des Sichtfelds ausleuchten und die Kombination aller Strahlengruppen das gesamte Sichtfeld formt. Sowohl die totalreflektierten Flächen 111 wie auch die Außenflächen 112, 121 können gut genutzt werden, um das rotationssymmetrische Abstrahlprofil des Emitters in ein rechteckiges/quadratisches oder elliptisches Strahlenfeld zu überführen. Die Tx-TIR-Optik 100 wird für eine reale Quelle entwickelt, d.h. der Emitter 130 besitzt eine räumliche Ausdehnung und dessen reales Abstandprofil wird durch eine mathematische Funktion approximiert. Der Tx-TIR-Optik 100 ist es möglich, je nach Entwurf, einen beliebig geformten Spot zu formen. Typischerweise wird ein kreisrunder, elliptischer oder rechteckiger Spot geformt. Die Ausdehnung des jeweiligen Sichtfeldes ist beliebig. Die Leistungsverteilung innerhalb des Spots kann sowohl homogen als auch inhomogen sein. Falls der geformte Spot kreisrund und das Abstrahlprofil des Emitters rotationssymmetrisch ist, entspricht die Achse 140 der Rotationsachse der Tx-TIR-Optik. Ansonsten, beispielsweise bei rechteckigen oder elliptischen Spots, ist die Optik nicht rotationssymmetrisch. In diesem Fall ist die Achse 140 nicht als Rotationsachse zu verstehen, sondern eher als Hauptstrahlungsachse und dient zur Platzierung des Emitters bzw. des Empfängers 130 bzw. zur allgemeinen Orientierung.

Die Tx-TIR-Optik 100 kann sowohl mit sichtbaren als auch mit ultraviolettem oder Infrarotlicht verwendet werden. Damit besteht die primäre Funktion dieser Optik ausdrücklich nicht in der Beleuchtung, sondern in der optisch, drahtlosen Kommunikation.

An dieser Stelle sei auch angemerkt, dass obiger Aspekt zusammen mit einem Transmitter (vgl. Tx-TIR-Optik) erläutert wurden selbstverständlich auch auf einen Receiver mit einem Empfangsmodul, statt mit einem Sendemodul 130, zu verstehen sind. Insofern ist die oben erläuterte Optik auch als Rx-TIR-Optik anwendbar.

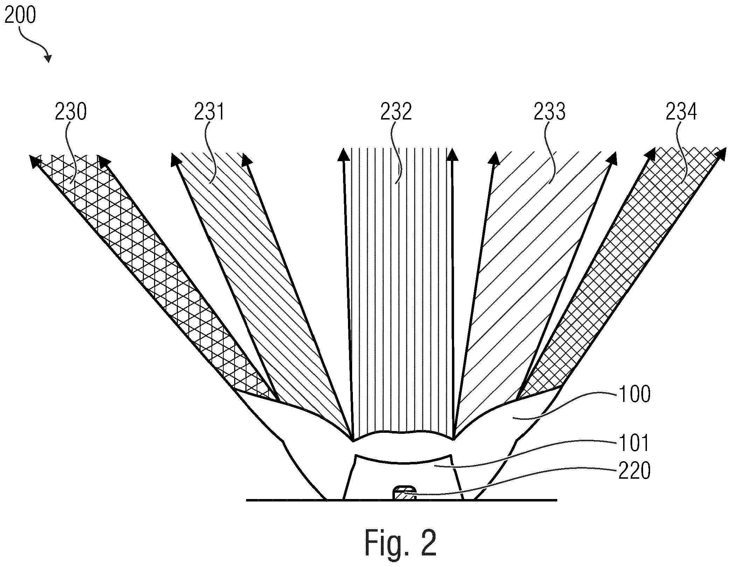

Bezugnehmend auf Fig. 2 wird nun eine Anwendung der Optik 100 erläutert. Die Optik 100 wird hier zusammen mit einem Emitter 220 als Sendeelement eingesetzt und formt so den Transmitter 200. Bei diesem speziellen Anwendungsfall kann die Tx-TIR-Optik 100 für die Kommunikation mit mehreren Kanälen genutzt werden. Diese mit dem Bezugszeichen 230, 231, 232, 233 und 234 gekennzeichneten Kanäle sind spatial voneinander getrennt. Es lassen sich zwei grundsätzlich verschiedene Szenarien unterscheiden.

Wie in Fig. 2 verdeutlicht, werden die unterschiedlichen Strahlengruppen eines Emitters 220 durch die Tx-TIR-Optik 100 in verschiedene Richtungen gelenkt und leuchten unterschiedliche Receiver, die die Signale empfangen, an. Für den Fall, dass die Tx-TIR-Optik 100 nicht rotationssymmetrisch ist, können die Abstrahlwinkel der Sichtfelder 230 und 234 bzw. 231 und 233 unterschiedlich sein, so dass insgesamt fünf Empfangsgeräte mit Signalen von dem Emitter 220 versorgt werden können. Wie hier dargestellt, ist der Emitter 220 wiederum zentral in der Kavität 101 platziert.

Die fünf voneinander separierten Kanäle 230 bis 234 werden wie folgt abgebildet. Der zentrale Kanal 232 wird durch die Grenzflächen 120 und 121 (vgl. Fig. 1) entlang der Hauptstrahlungsrichtung 140 gebildet. Über die Teilbereiche 112a, 111a und 110a wird der Kanal 234 geformt. Auf der gegenüberliegenden Seite wird über die gegenüberliegenden Flächen der Kanal 230 geformt. Unter Verwendung der Flächen 110b, 111b und 112b wird der Kanal 233 geformt, während über die gegenüberliegenden Flächen der Kanal 231 geformt wird.

Entsprechend einer zweiten Variante kann die Tx-TIR-Optik auch in einer MIMO Konfiguration genutzt werden.

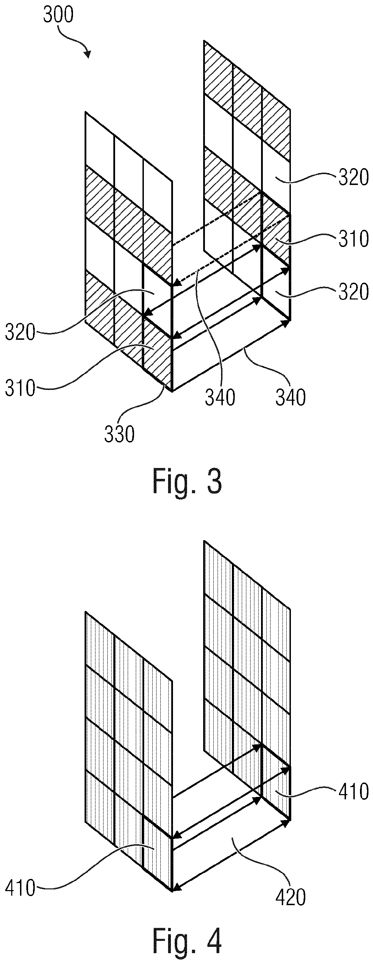

Hierbei wäre es denkbar, dass mehrere Transmitter bzw. Receiver bzw. Transceiver inklusiven deren Optiken in einem Feld angeordnet sind, wie beispielsweise Fig. 3 zeigt. Fig. 3 zeigt einen MIMO-Ansatz mit separaten Transmittern 310 und Empfängern 320. Jeweils ein benachbarter Transmitter 310 und Empfänger 320 formen einen Transceiver 330. Der Transmitter 310 formt mit dem gegenüberliegenden, geometrisch zugeordneten Receiver 320 jeweils einen unidirektionalen Kanal 340. Zwei benachbarte unidirektionale Kanäle formen dementsprechend einen bidirektionalen Kommunikationskanal, welcher vollduplexfähig ist. Für die bestmögliche Ausnutzung der Fläche sind die Bereiche für die Sende- und Empfangs-Elemente beispielsweise quadratisch geformt. Hierbei sei angemerkt, dass in entsprechend bevorzugten Ausführungsbeispielen das Empfangselement quadratisch oder rechteckig ist, wohingegen die Sendeoptik nicht zwingend bzw. nicht bevorzugt einen solchen Grundriss haben muss, solange sie den Empfangsbereich quadratisch/rechteckig ausleuchtet. So formt also ein Feld mit einer Vielzahl von Tx-TIR-Optiken mit jeweils darin angeordneten Transmittern zusammen mit einer Vielzahl von Receivern, die beispielsweise auch eine Rx-TIR-Optiken aufweisen können, ein Array, das für eine bidirektionale Übertragung ausgelegt ist. Durch die räumliche Trennung von Transmitter (Emitter plus Optik) und Receiver (Detektor plus Optik) entsteht also erst in Kombination beider der vollständiger Transceiver 230. Wie oben bereits erläutert ist dieser Transceiver bi-direktional und erreicht eine ideale Kanaldichte, indem bevorzugterweise der Kanal rechteckig bzw. quadratisch geformt wird. Aufgrund der Kompaktheit der Optik und der Fähigkeit den Kommunikationskanal nahezu beliebig zu formen sind derartig gebaute Transceiver prädestiniert für die Maximierung zur Datenrate mittels MIMO. An dieser Stelle sei angemerkt, dass die Optik des Empfängers nicht zwingend der oben dargestellten TIR-Optik 100 entsprechen muss, sondern auch anders ausgeführt sein kann.

In Fig. 4 wird ein weiteres MIMO-System mit Transceivern dargestellt. Der Transmitter und Receiver ist in einem quadratischen Feldelement kombiniert, das mit dem Bezugszeichen 410 versehen ist. Der geformte, optische Kommunikationskanal ist bidirektional, wobei der Hin- und Rückkanal die gleiche räumliche Ausdehnung und Position aufweist. Bei dieser Variante wird bevorzugterweise eine Tx-Optik in Kombination mit einem Empfänger und einem Sender, der in der Kavität angeordnet ist, verwendet. Der Flächenbedarf des bidirektionalen MIMO-Ansatzes kann in etwa halbiert werden, durch die gemeinsame Anordnung von Sender und Empfänger in der Optik. Hierbei kann also Hin- und Rückkanal die gleiche Position im Raum aufweisen, um einen echten bidirektionalen Kanal, der sowohl halb- als auch vollduplexfähig ist, herzustellen. Jedes Feldelement 410 repräsentiert einen vollständigen Transceiver bestehend aus Transmitter und Receiver. An dieser Stelle sei angemerkt, dass beispielsweise das Versenden unter Verwendung der zentralen Linsenbereiche realisiert ist, während der Empfang über die Brechungsbereiche 112 bzw. über die Totalreflexionsbereiche 111 erfolgt. Selbstverständlich ist es auch möglich, dass die Zuordnung der zu Sende- und Empfangszwecken genutzten optischen Bereiche vertauscht oder anders kombiniert ist, wenn man beispielsweise berücksichtigt, dass mehr als zwei räumlich voneinander getrennte Übertragungskanäle mittels der Optik geformt werden können.

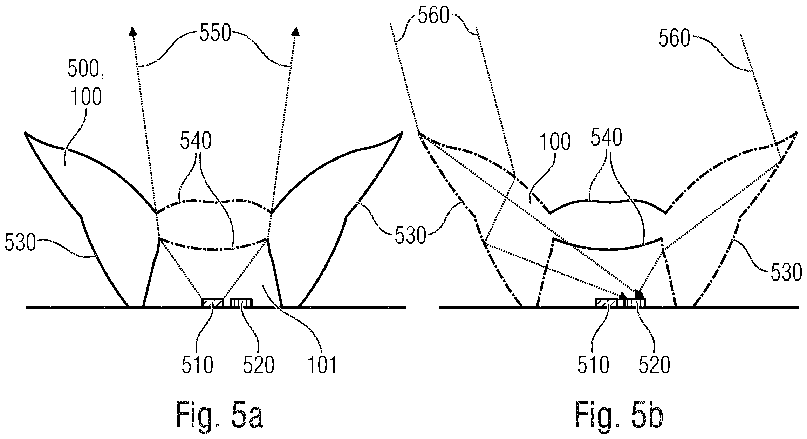

Bezugnehmend auf Fig. 5a und 5b wird nun nachfolgend die Verwendung der in Fig. 1 erläuterten Optik 100 in Kombination mit einem Empfänger und einem Sender erläutert.

Fig. 5a und 5b zeigen jeweils die Optik 100 in Kombination mit einem Emitter 510 und einem Photodetektor (z. B. Photodiode) 520. Der Photodetektor 520 und Emitter 510 sind beide in der Kavität 101, z. B. nebeneinander angeordnet. In Fig. 5a ist mittels der strichpunktierten Linien dargestellt, welche Bereiche der Grenzflächen für den Sendemodus (vgl. emittierte Strahlung 550) verwendet werden, während Fig. 5b mit der strichpunktierten Linie darstellt, welche Bereiche der Grenzflächen zum Empfangen der einfallenden Strahlung 560 Verwendung finden. Die eingezeichneten Lichtstrahlen 550 bzw. 560 sind als exemplarische Strahlen und nicht als Randstrahlen zu verstehen.

Die zentrale Grenzfläche 540 der Optik 500 bzw. 100 ist so geformt, dass sie die vom Emitter 510 emittierte Strahlung 550 in das Sichtfeld lenkt. Die äußeren Bereiche 530 der Optik konzentrieren die einfallende Strahlung 560 auf den Photodetektor 520. Da sich in diesem Ausführungsbeispiel der Photodetektor 520 nicht zentral unter der Optik befindet (d. h. er sitzt nicht auf der optischen Achse wie der Empfänger 510 bzw. allgemein das Modul, das mit den Linsenelementen 540 korrespondiert), ist bevorzugterweise die Optik nicht rotationssymmetrisch ausgeführt, damit der Fokuspunkt der äußeren Grenzflächen 530 auf dem Photodetektor 520 liegt. Falls entsprechend Ausführungsbeispielen ein ringförmiger Detektor eingesetzt wird, so kann dieser um den Emitter herum (konzentrisch) platziert werden. In diesem Spezialfall kann entsprechend weiteren Ausführungsbeispielen dann das Optikmodul 100 bzw. 500 auch rotationssymmetrisch ausgeführt werden.

Der Ansatz ist sowohl mit LEDs wie auch mit LDs realisierbar. Die optimale Performance wird in diesem Fall erreicht, wenn der Emitter seine Strahlung über einen möglichst kleinen Raumwinkel emittiert. Dann kann die TIR-Optik so entworfen werden, dass die gesamte emittierte Strahlung auf den zentralen Bereich trifft. Dieser Bereich kann dann möglichst klein gestaltet werden, sodass die Fläche der äußeren Bereiche maximiert werden kann. Dadurch erhöht sich die optische Verstärkung des Empfangssignals.

In den obigen Ausführungsbeispielen wurde davon ausgegangen, dass ein, zwei oder drei ordentlich getrennte Kanäle mit einer Optik erzeugt werden können. Je nach genauer Ausgestaltung der Linsenbereiche, insbesondere je nach genauer Ausgestaltung der Totalreflexionsbereiche in Kombination mit den äußeren Kernflächen (Brechungsbereichen) können natürlich auch mehr Kanäle geformt sein. Eine unsymmetrisch gestaltende Optik ist prädestiniert mehrere Kanäle zu formen. Nur nach genauer Implementierung (vgl. Ausführungsbeispiele aus Fig. 5) kann die Anordnung von Emitter bzw. Detektor auf der optischen Achse 140 oder versetzt zu selbiger variieren.

Entsprechend Ausführungsbeispielen können einzelne oder alle Flächen, außer die totalreflektierenden, mit einer Antireflexionsschicht versehen sein, um Rückreflexionen zu vermindern. Darüber hinaus kann der Totalreflexionsbereich beispielsweise partiell mit einer reflektierenden Schicht versehen sein um Reflexion an jenen Stellen zu erzwingen an denen die Totalreflexion fehlschlägt.

Bezüglich der Geometrien (Wölbungen, konvexen Wölbungen), der Linsenbereiche sowie der Brechungsbereiche sowie Teilbereiche der Brechungsbereiche sei angemerkt, dass diese je nach Implementierung so geformt sein können, dass eine Fokussierung der einfallenden bzw. ausfallenden Strahlung auf einen entsprechenden Sender oder Empfänger bzw. von einem entsprechenden Sender oder Empfänger ermöglicht wird. Eine Dimensionierung bzw. ein Design dieser Flächen ist abhängig von der Form des Kommunikationskanals, von den verwendeten Brechungsindizes, eventuellen Zusatzschichten und den Brechungsindizes des umgebenden Materials. Darüber hinaus hat selbstverständlich auch noch die Wellenlänge, welche für den Kommunikationskanal eingesetzt wird, einen Einfluss.

Ein weiteres Ausführungsbeispiel bezieht sich auf ein Herstellungsverfahren der Optik. Die Optik ist bevorzugterweise aus einem homogenen Material in einem Spritzgießverfahren herzustellen. Der Vorteil dabei ist, dass die Optik in einem Schritt geformt wird, wodurch eine Nachbearbeitung entfällt, sodass insgesamt die Herstellungskosten reduziert werden. Falls eine geringe Anzahl von Prototypen der Optik hergestellt werden sollen, ist es alternativ möglich diese mit Hilfe eines Dreh- oder Fräsprozesses zu produzieren, wobei eine hohe Präzision erforderlich ist. An dieser Stelle sei angemerkt, dass eine Beschreibung eines Produktmerkmals ebenso als Beschreibung eines Verfahrensschrittes zu verstehen ist.

### Literatur

[1] Donglin Ma, Zexing Feng, and Raongguang Liang: "Freeform illumination lens design using composite ray mapping"; Appl. Opt. 54; 598-503; 2015

## Patentansprüche

1. Daten-Kommunikationsmodul (200) umfassend eine Optik (100, 500) sowie ein Sende- oder ein Empfangselement (130, 220, 510, 520) oder ein Sende- und Empfangselement (130, 220, 510, 520), die in einer Kavität (101) oder zentral in der Kavität (101) angeordnet sind und die ausgebildet sind, in einer Hauptstrahlungsrichtung (140) ein Signal (550, 560, 230, 231, 232, 233, 234) zu emittieren und/oder zu empfangen,
wobei die Optik (100, 500) einen aus einem zur Kommunikationswellenlänge optisch transparenten Material geformten optischen Körper umfasst, der folgende Merkmale aufweist:
die Kavität (101), wobei zwischen der Kavität (101) und dem optischen Körper eine erste Grenzfläche (110, 120) ausgebildet wird;
einer gegenüber zu der Kavität (101) ausgebildeten zweiten Grenzfläche (112, 121); und
eine seitliche, beliebig geformte Grenzfläche (111) mit einem Totalreflexionsbereich (111);
wobei die erste Grenzfläche (110, 120) einen ersten zentralen Linsenbereich (120) sowie einen den ersten zentralen Linsenbereich (120) umgebenden ersten Brechungsbereich (110) bildet und wobei die zweite Grenzfläche (112, 121) einen zweiten zentralen Linsenbereich (121) sowie einen den zweiten zentralen Linsenbereich (121) umgebenden zweiten Brechungsbereich (112) bildet;
wobei der erste (120) und der zweite Linsenbereich (121) ausgebildet sind, eine erste Strahlengruppe (232) in Richtung der Hauptstrahlungsrichtung (140) abzubilden; und
wobei der zweite Brechungsbereich (112) der zweiten Grenzfläche ausgebildet ist, um eine zweite Strahlengruppe (233) entlang einer zweiten Strahlungsrichtung, die gewinkelt zu der Hauptstrahlungsrichtung (140) verläuft, abzubilden.

2. Daten-Kommunikationsmodul (200) gemäß Anspruch 1, wobei der erste zentrale Linsenbereich (120) und der zweite zentrale Linsenbereich (121) einer Freiformfläche entspricht, die beliebig geformt sein kann und/oder wobei Fresnel-Strukturen in diesen Bereich eingebracht sind, um die Dicke der Optik zu reduzieren.

3. Daten-Kommunikationsmodul (200) gemäß einem der vorhergehenden Ansprüche, wobei der Totalreflexionsbereich (111) eine Fresnel-Struktur umfasst; und/oder wobei die erste Grenzfläche (110, 120) und/oder die zweite Grenzfläche (112, 121) eine Fresnel-Struktur umfasst.

4. Daten-Kommunikationsmodul (200) gemäß einem der vorhergehenden Ansprüche, wobei durch die erste und die zweite Strahlengruppe (232, 233) zwei räumlich voneinander getrennte Übertragungskanäle geformt werden.

5. Daten-Kommunikationsmodul (200) gemäß einem der vorhergehenden Ansprüche,
wobei der erste Brechungsbereich (110) der ersten Grenzfläche in einem Bereich mit der Hauptstrahlungsrichtung (140) einen Winkel kleiner oder gleich 45° oder kleiner oder gleich 60°einschließt; und/oder
wobei der zweite Brechungsbereich (112) der zweiten Grenzfläche in einem Bereich mit der Hauptstrahlungsrichtung (140) einen Winkel größer oder gleich 45° oder größer oder gleich 30° einschließt; und/oder
wobei die seitliche Grenzfläche (111) mit der Hauptstrahlungsrichtung (140) einen Winkel im Bereich von 5° bis 85° einschließt.

6. Daten-Kommunikationsmodul (200) gemäß einem der vorhergehenden Ansprüche,
wobei der zweite Brechungsbereich (112) der zweiten Grenzfläche beliebig gekrümmt ist; oder
wobei der zweite Brechungsbereich (112) der zweiten Grenzfläche beliebig gekrümmt oder konvex gekrümmt ist, so dass zumindest zwei unterschiedlich gewinkelte Teilbereiche (112a, 112b) des zweiten Brechungsbereichs (112) ausgebildet werden.

7. Daten-Kommunikationsmodul (200) gemäß Anspruch 6, wobei ein erster Teilbereich (112a) des zweiten Brechungsbereichs (112) der zweiten Grenzfläche ausgebildet ist, um eine zweite Strahlengruppe (233) entlang einer zweiten Strahlungsrichtung abzubilden und wobei ein zweiter Teilbereich (112b) des zweiten Brechungsbereichs (112) der zweiten Grenzfläche ausgebildet ist, um eine dritte Strahlengruppe (234) entlang einer dritten Strahlungsrichtung abzubilden, wobei die zweite und dritte Strahlungsrichtung einen Winkel einschließen und die zweite und dritte Strahlungsrichtung gegenüber der Hauptstrahlungsrichtung (140) einen weiteren Winkel einschließen.

8. Daten-Kommunikationsmodul (200) gemäß einem der vorhergehenden Ansprüche,
wobei der Totalreflexionsbereich (111) zwei Teilbereiche (111a, 111b) umfasst; und/oder
wobei ein erster Teilbereich (111a) des Totalreflexionsbereichs (111) ausgebildet ist, um eine zweite Strahlengruppe (233) entlang einer zweiten Strahlungsrichtung abzubilden und wobei ein zweiter Teilbereich (111b) des Totalreflexionsbereichs (111) ausgebildet ist, um eine dritte Strahlengruppe (234) entlang einer dritten Strahlungsrichtung abzubilden, wobei die zweite und dritte Strahlungsrichtung einen Winkel einschließen und die zweite und dritte Strahlungsrichtung gegenüber der Hauptstrahlungsrichtung (140) einen weiteren Winkel einschließen.

9. Daten-Kommunikationsmodul (200) gemäß einem der vorhergehenden Ansprüche,
wobei der Totalreflexionsbereich (111) beliebig gekrümmt ist, oder
wobei Teilbereiche der Totalreflexionsbereich (111) jeweils beliebig gekrümmt sind.

10. Daten-Kommunikationsmodul (200) gemäß einem der vorhergehenden Ansprüche,
wobei der optische Körper axialsymmetrisch oder rotationssymmetrisch um eine Achse (140) entlang der Hauptemissionsrichtung oder rotationssymmetrisch um eine Achse (140) entlang der Hauptemissionsrichtung durch das Sende- und/oder Empfangs-Element (130, 220, 510, 520) ist; oder
wobei der optische Körper axialsymmetrisch oder rotationssymmetrisch um eine Achse (140) entlang der Hauptemissionsrichtung oder rotationssymmetrisch um eine Achse (140) entlang der Hauptemissionsrichtung durch das Sende- und/oder Empfangs-Element (130, 220, 510, 520) ist und der erste Brechungsbereich (110) der ersten Grenzfläche und der zweite Brechungsbereich (112) der zweiten Grenzfläche sich in Form einer Kreisbogenfläche um die Achse (140) oder einer Freiformfläche um die Achse (140) erstrecken.

11. Daten-Kommunikationsmodul (200) gemäß einem der vorhergehenden Ansprüche, wobei das Sendeelement eine Leuchtdiode oder Laserdiode umfasst und/oder wobei das Empfangselement (130, 220, 510, 520) einen Detektor, wie beispielsweise eine Photodiode umfasst.

12. Array aus Daten-Kommunikationsmodulen (330, 410) mit einem Daten-Kommunikationsmodul gemäß einem der vorhergehenden Ansprüche, wobei mittels des ersten und zweiten Linsenbereichs erste Strahlengruppe (232) in Richtung der Hauptstrahlungsrichtung (140) abgebildet wird und mittels des Totalreflexionsbereichs (111) und/oder des ersten (110) und zweiten Brechungsbereichs (112) zumindest eine zweite Strahlengruppe (233) abgebildet wird; oder
wobei mittels des ersten und zweiten Linsenbereichs eine erste Strahlengruppe (232) in Richtung der Hauptstrahlungsrichtung (140) abgebildet wird und mittels des Totalreflexionsbereichs (111) und/oder des ersten und zweiten Brechungsbereichs (112) zumindest eine zweite Strahlengruppe (233) abgebildet wird; und wobei die erste (232) und zweite Strahlengruppe (233) so abgebildet wird, dass ein Sendesignal (550, 560, 230, 231, 232, 233, 234) und ein Empfangssignal (550, 560, 230, 231, 232, 233, 234) sich entlang einer lateralen Ausdehnungsrichtung des Transceiver-Arrays (330, 410) abwechseln.

13. Array aus Daten-Kommunikationsmodulen (330, 410) mit spatial getrennten Transmitter und Receiver gemäß einem der Ansprüche 1 bis 11, wobei die Transceiver nebeneinander angeordnet sind; oder
wobei die nebeneinander angeordneten Kommunikationsmodule derart angeordnet sind, dass ein für das Senden ausgelegter Transmitter sich mit einem für das Empfangen ausgelegten Receiver entlang einer Ausdehnungsrichtung des Transceiver-Arrays (330, 410) abwechselt.

14. System aus mehreren Daten-Kommunikationsmodulen (300, 400) umfassend zumindest zwei Arrays aus Daten-Kommunikationsmodulen (330, 410) gemäß einem der Ansprüche 1 bis 11, wobei die Arrays aus Kommunikationsmodulen (330, 410) einander derart gegenüberliegen, dass ein für den Empfang ausgerichteter Linsenbereich oder zweiter Brechungsbereich (112) einem für das Senden ausgelegten Linsenbereich oder zweiter Brechungsbereich (112) geometrisch zugeordnet ist; oder
wobei die Arrays aus Kommunikationsmodulen (330, 410) einander derart gegenüberliegen, dass ein für den Empfang ausgerichteter Receiver einem für das Senden ausgelegter Transmitter geometrisch zugeordnet ist.

15. Array aus Daten-Kommunikationsmodulen (330, 410) gemäß einem der Ansprüche 1 bis 11, wobei ein für den Empfang ausgelegter Linsenbereich oder zweiter Brechungsbereich (112) eine quadratische oder rechteckige Form aufweist; oder
wobei ein für den Empfang ausgelegter Receiver eine quadratische oder rechteckige Grenzfläche (112, 121) aufweist.

## Claims

1. A data communication module (200) comprising optics (100, 500) and a transmission or a reception element (130, 220, 510, 520) or a transmission and reception element (130, 220, 510, 520) arranged in a cavity (101) or centrally in a cavity (101) and configured to emit and/or receive a signal (550, 560, 230, 231, 232, 233, 234) in a main radiation direction (140),
wherein the optics (100, 500) comprises an optical body formed of a material optically transparent for the communication wavelength, comprising:
the cavity (101), wherein a first interface (110, 120) is formed between the cavity (101) and the optical body;
a second interface (112, 121) formed opposite the cavity (101); and
a lateral interface (111) of any shape having a total internal reflection region (111);
wherein the first interface (110, 120) forms a first central lens region (120) and a first refraction region (110) surrounding the first central lens region (120), and wherein the second interface (112, 121) forms a second central lens region (121) and a second refraction region (112) surrounding the second central lens region (121);
wherein the first (120) and second lens regions (121) are configured to map a first beam group (232) in the direction of the main radiation direction (140); and
wherein the second refraction region (112) of the second interface is configured to map a second beam group (233) along a second radiation direction which is angled to the main radiation direction (140).

2. The data communication module (200) in accordance with claim 1, wherein the first central lens region (120) and the second central lens region (121) correspond to a freeform area which can be shaped as desired, and/or wherein Fresnel patterns are introduced in this region to reduce the thickness of the optics.

3. The data communication module (200) in accordance with any of the preceding claims, wherein the total internal reflection region (111) comprises a Fresnel pattern; and/or
wherein the first interface (110, 120) and/or the second interface (112, 121) comprise a Fresnel pattern.

4. The data communication module (200) in accordance with any of the preceding claims, wherein two spatially separate transmission channels are shaped by the first and second beam groups (232, 233).

5. The data communication module (200) in accordance with any of the preceding claims, wherein the first refraction region (110) of the first interface in one region encloses an angle of smaller than or equaling 45° or smaller than or equaling 60° with the main radiation direction (140); and/or
wherein the second refraction region (112) of the second interface in one region encloses an angle of greater than or equaling 45° or greater than or equaling 30° with the main radiation direction (140); and/or
wherein the lateral interface (111) encloses an angle in the range of 5° to 85° with the main radiation direction (140).

6. The data communication module (200) in accordance with any of the preceding claims, wherein the second refraction region (112) of the second interface is curved as desired; or
wherein the second refraction region (112) of the second interface is curved as desired or convexly curved such that at least two differently angled sub-regions (112a, 112b) of the second refraction region (112) are formed.

7. The data communication module (200) in accordance with claim 6, wherein a first sub-region (112a) of the second refraction region (112) of the second interface is configured to map a second beam group (233) along a second radiation direction, and wherein a second sub-region (112b) of the second refraction region (112) of the second interface is configured to map a third beam group (234) along a third radiation direction, wherein the second and third radiation directions enclose an angle, and the second and third radiation directions enclose another angle relative to the main radiation direction (140).

8. The data communication module (200) in accordance with any of the preceding claims, wherein the total internal reflection region (111) comprises two sub-regions (111a, 111b); and/or
wherein a first sub-region (111a) of the total internal reflection region (111) is configured to map a second beam group (233) along a second radiation direction, and wherein a second sub-region (111b) of the total internal reflection region (111) is configured to map a third beam group (234) along a third radiation direction, wherein the second and third radiation directions enclose an angle and the second and third radiation directions enclose another angle relative to the main radiation direction (140).

9. The data communication module (200) in accordance with any of the preceding claims, wherein the total internal reflection region (111) is curved as desired, or wherein sub-regions of the total internal reflection region (111) are each curved as desired.

10. The data communication module (200) in accordance with any of the preceding claims, wherein the optical body is axially symmetrical or rotationally symmetrical around an axis (140) along the main emission direction or rotationally symmetrical around an axis (140) along the main emission direction through the transmission and/or reception element (130, 220, 510, 520); or
wherein the optical body is axially symmetrical or rotationally symmetrical around an axis (140) along the main emission direction or rotationally symmetrical around an axis (140) along the main emission direction through the transmission and/or reception element (130, 220, 510, 520), and the first refraction region (110) of the first interface and the second refraction region (112) of the second interface extend in the shape of a circular arc area around the axis (140) or a freeform area around the axis (140).

11. The data communication module (200) in accordance with any of the preceding claims 1 to 13, wherein the transmission element comprises a light-emitting diode or laser diode, and/or wherein the reception element (130, 220, 510, 520) comprises a detector, like a photodiode, for example.

12. An array of data communication modules (330, 410) comprising a data communication module in accordance with any of the preceding claims, wherein a first beam group (232) is mapped in the direction of the main radiation direction (140) by means of the first and second lens regions and at least a second beam group (233) is mapped by means of the total internal reflection region (111) and/or the first (110) and second refraction regions (112); or
wherein a first beam group (232) is mapped in the direction of the main radiation direction (140) by means of the first and second lens regions and at least a second beam group (233) is mapped by means of the total internal reflection region (111) and/or the first and second refraction regions (112); and wherein the first (232) and second beam groups (233) are mapped such that a transmission signal (550, 560, 230, 231, 232, 233, 234) and a reception signal (550, 560, 230, 231, 232, 233, 234) alternate along a lateral extension direction of the transceiver array (330, 410).

13. An array of data communication modules (330, 410) comprising spatially separate transmitter and receiver in accordance with any of claims 1 to 11, wherein the transceivers are arranged next to one another; or wherein the communication modules arranged next to one another are arranged such that a transmitter configured for transmitting alternates with a receiver configured for receiving along an extension direction of the transceiver array (330, 410).

14. A system of several data communication modules (300, 400) comprising at least two arrays of data communication modules (330, 410) in accordance with any of claims 1 to 11, wherein the arrays of communication modules (330, 410) are opposite one another such that a lens region configured for receiving or second refraction region (112) is geometrically associated to a lens region configured for transmitting or second refraction region (112); or
wherein the arrays of communication modules (330, 410) are opposite one another such that a receiver configured for receiving is geometrically associated to a transmitter configured for transmitting.

15. An array of data communication modules (330, 410) in accordance with any of claims 1 to 11, wherein a lens region configured for receiving or second refraction region (112) comprises a square or rectangular shape; or
wherein a receiver configured for receiving comprises a square or rectangular interface (112, 121).

## Revendications

1. Module de communication de données (200) comportant une optique (100, 500) ainsi qu'un élément de transmission ou un élément de réception (130, 220, 510, 520) ou un élément de transmission et de réception (130, 220, 510, 520) qui sont disposés dans une cavité (101) ou de manière centrale dans la cavité (101) et qui sont conçus pour émettre et/ou pour recevoir un signal (550, 560, 230, 231, 232, 233, 234) dans une direction de rayonnement principale (140),
dans lequel l'optique (100, 500) comporte un corps optique formé en un matériau qui est optiquement transparent à la longueur d'onde de communication et qui présente les caractéristiques suivantes:
la cavité (101), où entre la cavité (101) et le corps optique est formée une première interface (110, 120);
une deuxième interface (112, 121) réalisée opposée à la cavité (101); et
une interface latérale de forme arbitraire (111) avec une zone de réflexion totale (111);
dans lequel la première interface (110, 120) forme une première zone de lentille centrale (120) ainsi qu'une première zone de réfraction (110) entourant la première zone de lentille centrale (120) et dans lequel la deuxième interface (112, 121) forme une deuxième zone de lentille centrale (121) et une deuxième zone de réfraction (112) entourant la deuxième zone de lentille centrale (121);
dans lequel la première (120) et la deuxième zone de lentille (121) sont conçues pour reproduire un premier groupe de rayons (232) en direction de la direction de rayonnement principale (140); et dans lequel la deuxième zone de réfraction (112) de la deuxième interface est conçue pour reproduire un deuxième groupe de rayons (233) dans une deuxième direction de rayonnement qui s'étend suivant un angle par rapport à la direction de rayonnement principale (140).

2. Module de communication de données (200) selon la revendication 1, dans lequel la première zone de lentille centrale (120) et la deuxième zone de lentille centrale (121) correspondent à une surface de forme libre qui peut être formée de manière arbitraire et/ou dans lequel des structures de Fresnel sont introduites dans cette zone, pour réduire l'épaisseur de l'optique.

3. Module de communication de données (200) selon l'une des revendications précédentes, dans lequel la zone de réflexion totale (111) comporte une structure de Fresnel; et/ou dans lequel la première interface (110, 120) et/ou la deuxième interface (112, 121) comporte une structure de Fresnel.

4. Module de communication de données (200) selon l'une des revendications précédentes, dans lequel sont formés, par le premier et le deuxième groupe de faisceaux (232, 233), deux canaux de transmission séparés spatialement l'un de l'autre.

5. Module de communication de données (200) selon l'une des revendications précédentes, dans lequel la première zone de réfraction (110) de la première interface forme dans une zone avec la direction de rayonnement principale (140) un angle inférieur ou égal à 45° ou inférieur ou égal à 60°; et/ou
dans lequel la deuxième zone de réfraction (112) de la deuxième interface forme dans une zone avec la direction de rayonnement principale (140) un angle supérieur ou égal à 45° ou supérieur ou égal à 30°; et/ou
dans lequel l'interface latérale (111) forme avec la direction de rayonnement principale (140) un angle de l'ordre de 5° à 85°.

6. Module de communication de données (200) selon l'une des revendications précédentes, dans lequel la deuxième zone de réfraction (112) de la deuxième interface est courbée de manière arbitraire; ou
dans lequel la deuxième zone de réfraction (112) de la deuxième interface est courbée de manière arbitraire ou courbée de manière convexe, de sorte que soient formées au moins deux zones partielles coudées de manière différente (112a, 112b) de la deuxième zone de réfraction (112).

7. Module de communication de données (200) selon la revendication 6, dans lequel une première zone partielle (112a) de la deuxième zone de réfraction (112) de la deuxième interface est formée pour reproduire un deuxième groupe de rayons (233) dans une deuxième direction de rayonnement et dans lequel une deuxième zone partielle (112b) de la deuxième zone de réfraction (112) de la deuxième interface est formée pour reproduire un troisième groupe de rayons (234) dans une troisième direction de rayonnement, dans lequel la deuxième et la troisième direction de rayonnement forment un angle entre elles et la deuxième et la troisième direction de rayonnement forment un autre angle par rapport à la direction de rayonnement principale (140).

8. Module de communication de données (200) selon l'une des revendications précédentes, dans lequel la zone de réflexion totale (111) comporte deux zones partielles (111a, 111b); et/ou
dans lequel une première zone partielle (111a) de la zone de réflexion totale (111) est formée pour reproduire un deuxième groupe de rayons (233) dans une deuxième direction de rayonnement et dans lequel une deuxième zone partielle (111b) de la zone de réflexion totale (111) est formée pour reproduire un troisième groupe de rayons (234) dans une troisième direction de rayonnement, dans lequel la deuxième et la troisième direction de rayonnement forment un angle entre elles et la deuxième et la troisième direction de rayonnement forment un autre angle par rapport à la direction de rayonnement principale (140).

9. Module de communication de données (200) selon l'une des revendications précédentes, dans lequel la zone de réflexion totale (111) est courbée de manière arbitraire, ou
dans lequel des zones partielles de la zone de réflexion totale (111) sont, chacune, courbées de manière arbitraire.

10. Module de communication de données (200) selon l'une des revendications précédentes, dans lequel le corps optique est à symétrie axiale ou à symétrie de rotation autour d'un axe (140) dans la direction d'émission principale ou à symétrie de rotation autour d'un axe (140) dans la direction d'émission principale à travers l'élément de transmission et/ou de réception (130, 220, 510, 520); ou
dans lequel le corps optique est à symétrie axiale ou à symétrie de rotation autour d'un axe (140) dans la direction d'émission principale ou à symétrie de rotation autour d'un axe (140) dans la direction d'émission principale à travers l'élément de transmission et/ou de réception (130, 220, 510, 520) et la première zone de réfraction (110) de la première interface et la deuxième zone de réfraction (112) de la deuxième interface s'étendent sous forme d'une face en arc de cercle autour de l'axe (140) ou d'une face de forme libre autour de l'axe (140).

11. Module de communication de données (200) selon l'une des revendications précédentes, dans lequel l'élément de transmission comporte une diode électroluminescente ou diode laser et/ou dans lequel l'élément de réception (130, 220, 510, 520) comporte un détecteur, tel qu'une photodiode.

12. Réseau de modules de communication de données (330, 410) avec un module de communication de données selon l'une des revendications précédentes, dans lequel est reproduit, au moyen de la première et de la deuxième zone de lentille, un premier groupe de rayons (232) en direction de la direction de rayonnement principale (140) et est reproduit, au moyen de la zone de réflexion totale (111) et/ou de la première (110) et de la deuxième zone de réfraction (112), au moins un deuxième groupe de rayons (233); ou
dans lequel est reproduit, au moyen de la première et de la deuxième zone de lentille, un premier groupe de rayons (232) en direction de la direction de rayonnement principale (140) et est reproduit, au moyen de la zone de réflexion totale (111) et/ou de la première et de la deuxième zone de réfraction (112), au moins un deuxième groupe de rayons (233); et dans lequel le premier (232) et le deuxième groupe de faisceaux (233) sont reproduits de sorte qu'un signal de transmission (550, 560, 230, 231, 232, 233, 234) et un signal de réception (550, 560, 230, 231, 232 , 233, 234) s'alternent dans une direction d'extension latérale du réseau d'émetteurs-récepteurs (330, 410).

13. Réseau de modules de communication de données (330, 410) avec des émetteurs et récepteurs séparés spatialement selon l'une des revendications 1 à 11, dans lequel les émetteurs-récepteurs sont disposés l'un à côté de l'autre; ou
dans lequel les modules de communication disposés l'un à côté de l'autre sont disposés de sorte qu'un émetteur conçu pour la transmission alterne avec un récepteur conçu pour la réception dans une direction d'extension du réseau d'émetteurs-récepteurs (330, 410).

14. Système composé de plusieurs modules de communication de données (300, 400) comportant au moins deux réseaux de modules de communication de données (330, 410) selon l'une des revendications 1 à 11, dans lequel les réseaux de modules de communication (330, 410) sont opposés l'un à l'autre de sorte qu'une zone de lentille ou une deuxième zone de réfraction (112) conçue pour la réception soit associée géométriquement à une zone de lentille ou une deuxième zone de réfraction (112) conçue pour la transmission; ou
dans lequel les réseaux de modules de communication (330, 410) sont opposés l'un à l'autre de sorte qu'un récepteur orienté pour la réception soit associé géométriquement à un émetteur conçu pour l'émission.

15. Réseau de modules de communication de données (330, 410) selon l'une des revendications 1 à 11, dans lequel une zone de lentille ou une deuxième zone de réfraction (112) conçue pour la réception présente une forme carrée ou rectangulaire; ou
dans lequel un récepteur conçu pour la réception présente une interface carrée ou rectangulaire (112, 121).
